# EUROPÄISCHE PATENTSCHRIFT

(11) **EP 0 438 609 B1**
(45) Veröffentlichungstag und Bekanntmachung des Hinweises auf die Patenterteilung: **01.09.1993**
(21) Anmeldenummer: 90101135.3
(22) Anmeldetag: 20.01.1990
(51) Int. Cl.: B23K 26/00

(54) **Verfahren und Einrichtung zum Aneinanderschweissen von Stahlblechen mittels Laserstrahlschweissverfahren**
Process and arrangement for welding steel sheets one against the other using a laser beam welding process
Procédé et installation pour souder des tôles d'acier l'une contre l'autre au moyen d'un procédé de soudage au rayon laser

(43) Veröffentlichungstag der Anmeldung: 31.07.1991
(73) Patentinhaber: THYSSEN INDUSTRIE AG MASCHINENBAU, 58453 Witten (DE)
(72) Erfinder: Jäck, Kurt, D-7960 Aulendorf (DE); Prange, Wilfried, D-4220 Dinslaken (DE); Alber, Gerhard, D-7980 Ravensburg (DE)
(74) Vertreter: Beyer, Rudi

(56) Entgegenhaltungen:
- EP-A- 0 151 848
- US-A- 4 854 493
- PATENT ABSTRACTS OF JAPAN vol. 12, no. 432 (M-763)(3279) 15 November 1988,& JP-A- 63165087 (KAWASAKI STEEL CORPORATION)

## Beschreibung

Die Erfindung betrifft ein Verfahren zum stumpfen Aneinanderschweißen von Stahlblechen dicker als 0,35 Millimetern mittels Laserstrahlschweißverfahren, wobei in demselben Verfahrensablauf an den aneinander zu schweißenden Endabschnitten der Blechbahnen durch Abtrennen mittels eines Laserstrahls je eines endseitigen Randstreifens die Blechbahnenden zur Schweißnahtvorbereitung begradigt und vorbereitet werden.

Des weiteren betrifft die Erfindung eine Einrichtung zum Durchführen des Verfahrens.

Bei dem vorbekannten Abbrennstumpfschweißverfahren werden die aneinanderangrenzenden Enden des vorlaufenden und des nachlaufenden Coils (Blechband) stumpf gegeneinander gefahren und durch Widerstandsschweißung miteinander verbunden.

Vorbekannt ist auch das sogenannte Rollnahtschweißverfahren. Dabei werden die aneinanderangrenzenden Blechenden des vor- und nachlaufenden Coils durch Rollschweißelektroden miteinander verschweißt.

Es gibt auch das sogenannte Clinchen, wobei die beiden Coilenden durch Prägen miteinander verbunden werden, was zu erheblichen Schweißnahtüberhöhungen führt, die ein Walzkaliber bei unaufmerksamen Walzen solcher Stahlbleche erheblich beschädigen können.

Vorbekannt sind auch Plasma-Schweißverfahren. Hierbei kommt es allerdings zu Nahtüberhöhungen. Ungünstig ist auch die höhere Wärmeeinbringung in die Schweißnaht infolge der breiteren Wärmeeinflußzonen. Dadurch kommt es zur Aufhärtung der Schweißnahtbereiche mit schlechter Verformungsgüte.

Bei all diesen Verfahren kommt es zu Nahtüberhöhungen, so daß auch das aufzuwickelnde Coil (vorlaufende Coil) nicht rund sein kann. Bei dünnen Blechen drücken sich die Nahtüberhöhungen im Coil durch. Außerdem kann es zu Beschädigungen der Walzkaliber kommen.

Durch die EP-A-0 151 848 ist eine Einrichtung zum Stumpfschweißen von Stahlbändern mittels eines Laserstrahls vorbekannt. Dabei werden die aneinander angrenzenden Blechränder mechanisch beschnitten und durch den Laserstrahl anschließend miteinander verschweißt. Der Aufwand ist bei dieser Vorrichtung relativ hoch.

Vorbekannt ist auch das sogenannte Mikroplasmaschweißverfahren für sehr dünne Bleche.

Aus der US-A-4 854 493 (die als nächstliegender Stand der Technik angesehen wird ist ein Verfahren und eine Einrichtung vorbekannt, mit einem vor- und einem nachlaufenden Coil, wobei durch das vorlaufende Coil das Bandmaterial des jeweils nachlaufenden Coils aufgewickelt wird, mit einer Laserstrahlschweißvorrichtung zum Verbinden der jeweiligen Blechbahnenden des vor- und des nachlaufenden Coils, wobei sowohl dem nachlaufenden als auch dem vorlaufenden Randstreifen Spannbacken zugeordnet sind, die motorisch in Klemmstellung und in Offenstellung beweglich sind, wobei die Klemmbacken die Randstreifen zwischen sich festklemmen, derart, daß randseitig freie Endabschnitte zwischen den Klemmbacken herausragen; und wobei eine Laserstrahlschweißvorrichtung motorisch orthogonal zur Banddurchlaufrichtung mindestens über die Bahnbreite motorisch verstellbar angeordnet ist, die einerseits die beiden aus den Klemmbackenpaaren herausragenden Blechstreifen zwecks Nahtvorbereitung abtrennt und zum anderen die anschließend stumpf gegeneinander gebrachten Blechbahnenden miteinander verschweißt.

Dieser Stand der Technik eignet sich für sehr dünne Bleche, da die Blechstreifen magnetisch festgehalten werden sollen. Ebenfalls ist nicht zu erkennen, daß dieses Verfahren auch zum Laserstrahlschweißen von kaltgewalzten Feinblechbändern, die feuerverzinkt, elektolytisch verzinkt oder sonstwie beschichtet sind, geeignet wäre. Insbesondere ist nicht zu erkennen, daß dieses Verfahren sich zum Verbinden von Blechen eignet, wie sie üblicherweise im Kfz-Karosseriebau zur Anwendung gelangen sollen. Außerdem ist die Entsorgung der Einrichtung von den abgeschnittenen Randstreifen schwierig.

Aus der EP-A-151 848 ist es grundsätzlich bekannt, eine Spannbrücke für ein nachlaufendes Coil an einem Horizontalschlitten in Banddurchlaufrichtung in beiden Richtungen motorisch zu verstellen und auch in der jeweils gewünschten Lage arretierbar anzuordnen. Dabei soll allerdings das Abtrennen der durch eine mechanische Vorrichtung erfolgen.

Deshalb liegt der Erfindung die Aufgabe zugrunde, ein Verfahren zum stumpfen Aneinanderschweißen der Enden zweier Blechbahnen aus hochwertigen Werkstoffen von größer als 0,35 Millimetern Dicke zu schaffen, die z. B. durch ein- oder beidseitiges Verzinken, oder aber auch durch Beschichtungen korrosionsfest gestaltet sind, wobei sich das Verfahren insbesondere zum Verbinden von Blechbahnenden eignen soll, wie sie im Kfz-Karosseriebau benötigt werden.

Des weiteren liegt der Erfindung die Aufgabe zugrunde, eine leistungsfähige Einrichtung zum Durchführen dieses Verfahrens zu schaffen.

Hinsichtlich des Verfahrens wird die Aufgabe wird durch die in **Patentanspruch 1** wiedergegebenen Merkmale gelöst.

Bei der Erfindung erfolgt das Verschweißen und das endseitige Trennen der aneinandergrenzenden Blechbahnen durch ein und denselben Laser. Eine mechanische Bearbeitung der Enden des vor- und nacheilenden Coils ist somit nicht mehr erforderlich. Dadurch ergibt sich nicht nur eine sehr saubere Randausbildung der miteinander zu verschweißenden Blechenden, sondern auch eine sehr saubere Nahtausbildung, die keinerlei Überhöhung mehr aufweist, so daß das gefürchtete Nahtdurchdrücken im Coil nicht mehr auftreten kann. Außerdem braucht man beim Walzen nicht mehr Obacht zu geben, daß die Walzkaliber rechtzeitig auseinandergefahren werden, um deren Beschädigung durch Schweißnahtüberhöhungen zu vermeiden.

Vorteilhaft ist bei Anwendung des erfindungsgemäßen Verfahrens auch, daß Stahlbleche aus höherwertigen Stählen, z. B. Siliciumstahl, problemlos verarbeitet werden können.

Das erfindungsgemäße Verfahren läßt sich sowohl für einseitig, als auch für doppelseitig beschichtete Bleche, z. B. verzinkte Bleche, insbesondere galvanisch beschichtete Bleche, einsetzen.

Nachfolgend sollen einige Beispiele für die Anwendung des erfindungsgemäßen Verfahrens gegeben werden, ohne daß indessen die erfindungsgemäße Lehre (Aufgabe und Lösung) hierauf beschränkt wäre:

### Trägerwerkstoffe

- Feinblechbänder:
   - kaltgewalzt
   - feuerverzinkt
   - elektrolytisch verzinkt
   - Galfan
   - Galvalume
   - elektrolytisch Zn/Ni beschichtet
- Abmessungen:
   - Dicke:: 0,35 - 1,0 mm
   - Breite:: 500 - 1500 mm
   - Querschnitt:: 1500 mm² max.
- Coil:
   - Einlauf:: 30 t max.
   - Auslauf:: 30 t max.,
   mind. 3 t
- Leistung: (Referenz für Auslegung)
   30 t/h bei Bandabmessungen 1250 x 0,75 mm² mit 2-Schicht- Duroplastbeschichtung und 70 m/min. Geschwindigkeit im Beschichtungsteil.
   2-Schicht-Duroplastbeschichtung:
   normale Farbtöne: 5/20 = 25 um + 10 um Rückseitenlack
   helle Farbtöne: 8/27 = 35 um + 10 um Rückseitenlack
- Auslegungsgeschwindigkeit:
   max. 120 m/min. Bandgeschwindigkeit im Beschichtungsteil bei Kontibetrieb.
- Jahreskapazität: 12 x 12000 t bei 680 Betriebsstunden pro Monat.

### Beschichtete Fertigprodukte

Bänder mit:
- Flüssiglackbeschichtung
- ein- und beidseitig
- einschichtig und mehrschichtig
- Dekorfolienkaschierung
- Schutzfolienkaschierung
- Heißkaschierschutzfolie oder
- selbstklebende Folie

Schichtdicken:
- 1. Coater: 5 - 10 um (trocken) oben und/oder unten für Haftvermittler (Primer) mit 50 - 60 % Lösungsmittelanteil
- 2. Coater: 5 - 35 um (trocken) oben und/oder unten für übliche Kunststofflacke mit Lösungsmittelanteilen 50 - 60 %
- Folien 40 - 200 um.

Die Erfindung ermöglicht einen besonders rationellen Fertigungsablauf bei hoher Schweißnahtgüte und flexibler Verwendung.

Da die Unterstützungseinheiten nach unten absenkbar sind, ist das Entsorgen von den abgeschnittenen Randstreifen des vor- und des nachlaufenden Coils leicht möglich, da nach dem Absenken die abgetrennten Randstreifen nach unten und auf einen Förderer fallen können, der sie abtransportiert.

In **Patentanspruch 2** ist eine vorteilhafte Verfahrensweise der Erfindung beschrieben.

Hinsichtlich der Einrichtung wird diese Aufgabe durch die in **Patentanspruch 3** wiedergegebenen Merkmale gelöst.

Die erfindungsgemäße Einrichtung ermöglicht mit einem Laser sowohl das endseitige Abschneiden und damit begradigen der Coilenden, als auch deren stumpfes, sauberes Verschweißen wie es im Kfz-Karosseriebau benötigt wird. Die Einrichtung eignet sich mit Vorteil zum Bearbeiten von Blechen größer als 0,35 Millimeter Dicke.

Die Laservorrichtung weist eine Feineinstellung auf.

Bei gleich starken Blechen erfolgt die Verschweißung aneinandergrenzender Coilenden sozusagen durch eine orthogonale Bewegung des Lasers zur Banddurchlaufrichtung und parallel zur Blechoberfläche.

Handelt es sich um unterschiedlich dicke Bleche, so kann der Laser mit einem Schwenkmittelpunkt parallel zur Oberfläche der Bleche verstellt und um den Schwenkmittelpunkt auch in entgegengesetzten Schwenkrichtungen um ein begrenztes Winkelmaß verschwenkt werden. Außerdem läßt sich der Schwenkmittelpunkt vertikal einstellen und in der jeweils gewünschten Höhenlage arretieren.

Mit einer erfindungsgemäßen Einrichtung lassen sich somit die üblichen Coilbreiten miteinander verarbeiten, also trennen und stumpf verschweißen, z. B. Blechbreiten bis zu 1600 oder über 2000 mm, worauf die Erfindung allerdings nicht beschränkt ist.

Des weiteren lassen sich Blechbahnen mit allen in der Praxis vorkommenden Dickenabmessungen, z. B. 0,35 bis 6 mm, endseitig durch den Laser abtrennen und damit begradigen und stumpf miteinander verschweißen.

Dabei werden die Enden der Coil in vorteilhafter Weise unterstützt.

In **Patentanspruch 4** ist die Verstellmöglichkeit für die Laserstrahlschweißvorrichtung beschrieben. Hierbei ist der Laser fliegend an einem Schlitten oder einem Brückenteil angeordnet. Dieses Teil hängt wiederum an einer anderen Schlitteneinheit oder an einem anderen Teil, das orthogonal (quer) zur X-Achse verstellbar ist.

In der Zeichnung ist die Erfindung - teils schematischan einem Ausführungsbeispiel veranschaulicht. Es zeigen:
- Fig. 1: eine Einrichtung gemäß der Erfindung, wobei das erfindungsgemäße Verfahren sozusagen im Anfangszustand, also vor dem Aneinanderschweißen zweier Coilenden, dargestellt ist, in der Seitenansicht;
- Fig. 2: die aus Fig. 1 ersichtliche Anlage, wobei das Ende des vorlaufenden Coils bereits durch die Laserstrahlschweißanlage abgetrennt und begradigt worden ist;
- Fig. 3: die Einrichtung vor einem sogenannten Fügehub;
- Fig. 4: den Zustand nach dem Schweißen;
- Fig. 5: eine Einrichtung in ausschnittsweiser Seitenansicht;
- Fig. 6: eine teilweise Draufsicht zu Fig. 5 und
- Fig. 7: eine Einzelheit aus Fig. 5 im Bereich der aneinander angrenzenden Coilenden, in größerem Maßstab.

Das Bezugszeichen 1 bezeichnet in der Zeichnung ein aus höherwertigem Stahlband, z. B. Siliciumstahl, bestehenden Wickel, der in Richtung A motorisch abgewickelt wird. Der Motor ist nicht dargestellt. Der Blechwickel 1 wird nachfolgend als "nachlaufendes Coil" bezeichnet. Das Blechband 3 wird über eine im Bedarfsfalle motorisch angetriebene oder lose mitlaufende Umlenkrolle 2 geführt, während der Drehmittelpunkt, in der Zeichnungsebene gesehen, höher liegt, als der Drehmittelpunkt des nachlaufenden Coils 1. Die Welle, auf der das aufgewickelte Blechband 3 ruht, trägt das Bezugszeichen 4.

Bei 68 ist ein Boden angedeutet.

Das Blechband 3 soll auf einen anderen Blechwickel, der eine z. B. wesentlich größere Speicherkapazität als der Wickel 1 hat, aufgewickelt werden. Dieser Blechwickel, der nachfolgend als "vorlaufendes Coil" bezeichnet wird, ist aus der Zeichnung nicht ersichtlich, sondern lediglich das Blechband 68 des vorlaufenden Coils, das über mehrere Umlenkwalzen 6, 7, 8 und 9 mehrfach umgelenkt wird, bis es in eine Puffervorrichtung 10 hineingelangt, die aus mehreren Walzen besteht, von denen in der Zeichnung lediglich die Walzen 11, 12, 13, 14 und 15 dargestellt sind. Die Walzen 11, 12, einerseits und die Walzen 13, 14 und 15 andererseits können in Richtung B bzw. C motorisch voneinander entfernt oder gegeneinander bewegt werden. Dadurch wird die Speicherfähigkeit der Puffervorrichtung 10 verändert. Bei großem Abstand der Walzen 11, 12 einerseits und der Walzen 13, 14, 15 andererseits ist die Speicherkapazität der Puffervorrichtung entsprechend größer als bei kleinerem Abstand dieser Walzen voneinander.

Bei 16 ist ein Reservewickel angeordnet, der ein zweites nachlaufendes Coil bilden kann. Die Welle dieses zweiten nachlaufenden Coils ist mit 69 bezeichnet.

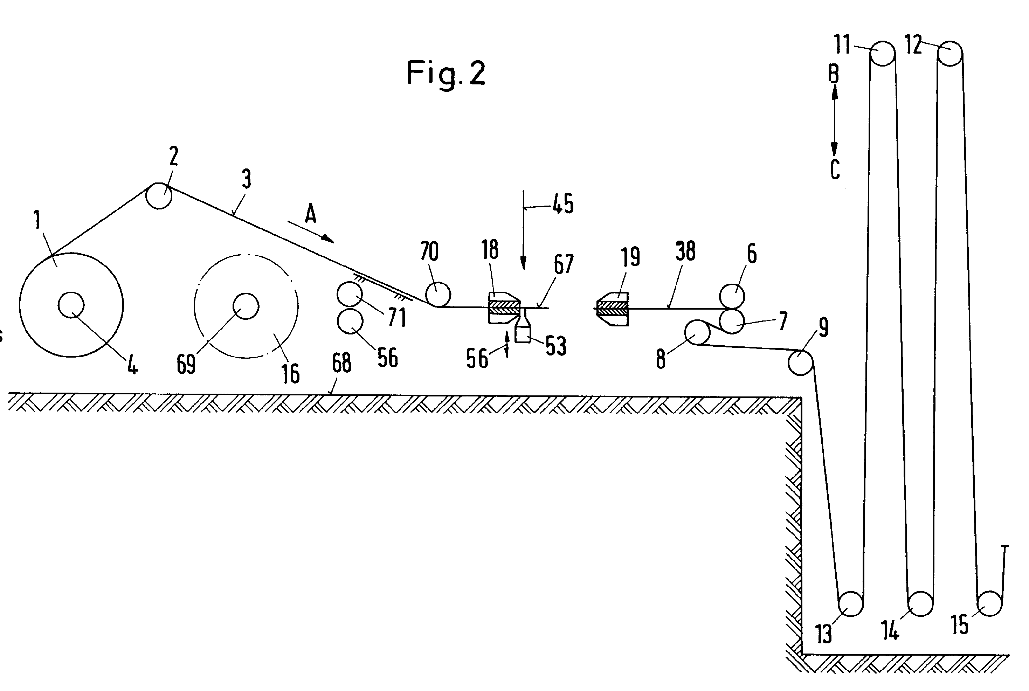

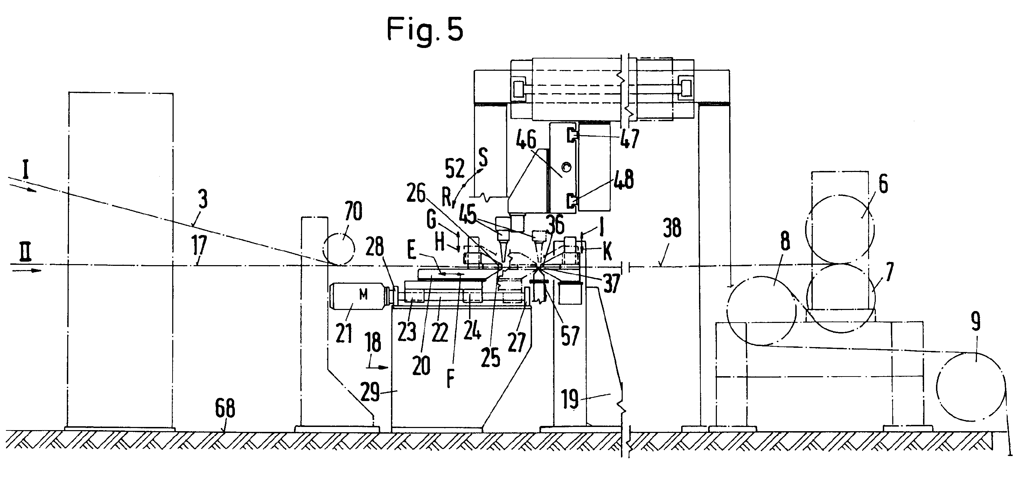

Während das Blechband 3 des ersten nachlaufenden Coils 1 nach dem Umlenken über die Umlenkrolle 2 durch eine weitere Umlenkwalze 70 (Fig. 2, 5) in die Horizontale umgelenkt wird, wird das Blechband 17 des Reservewickels bzw. des zweiten nachlaufenden Coils 16 durch ein Umlenkwalzenpaar 71, 72 in der Horizontalen geführt.

Die Blechbänder 3 bzw. 17 des ersten und des zweiten nachlaufenden Coils 1 bzw. 16 sind in Fig. 5 schematisch angedeutet.

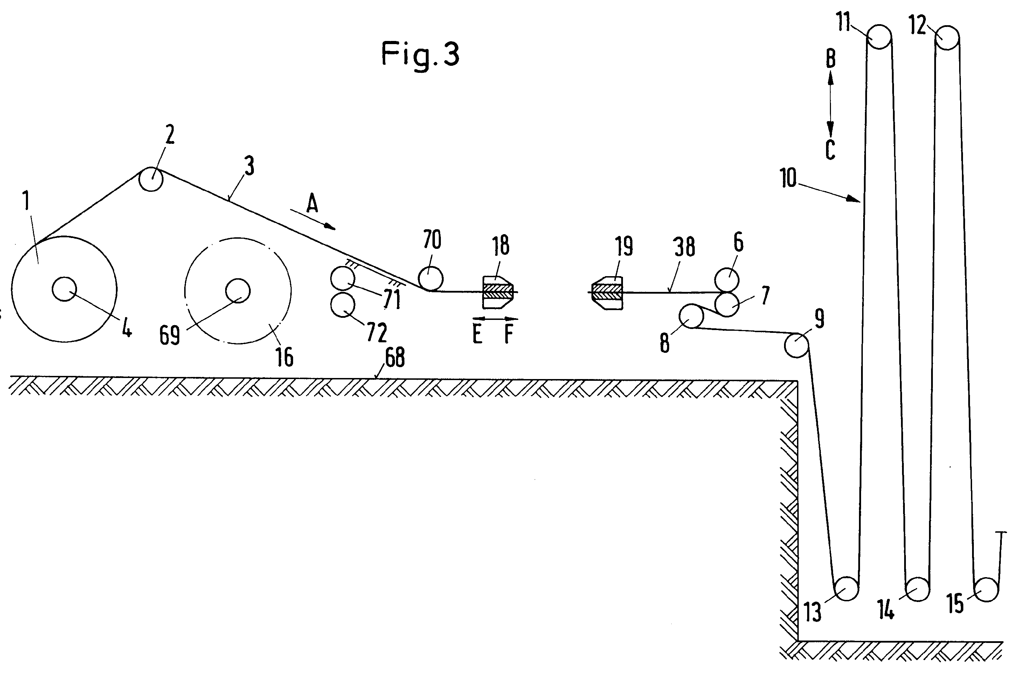

Mit den Bezugszeichen 18 und 19 sind Spannbrücken bezeichnet. Die Spannbrücke 19 ist stationär angeordnet, während die Spannbrücke 18 in Richtung E bzw. F (Fig. 3) parallel zum Blechband 3 horizontal verschieblich ist.

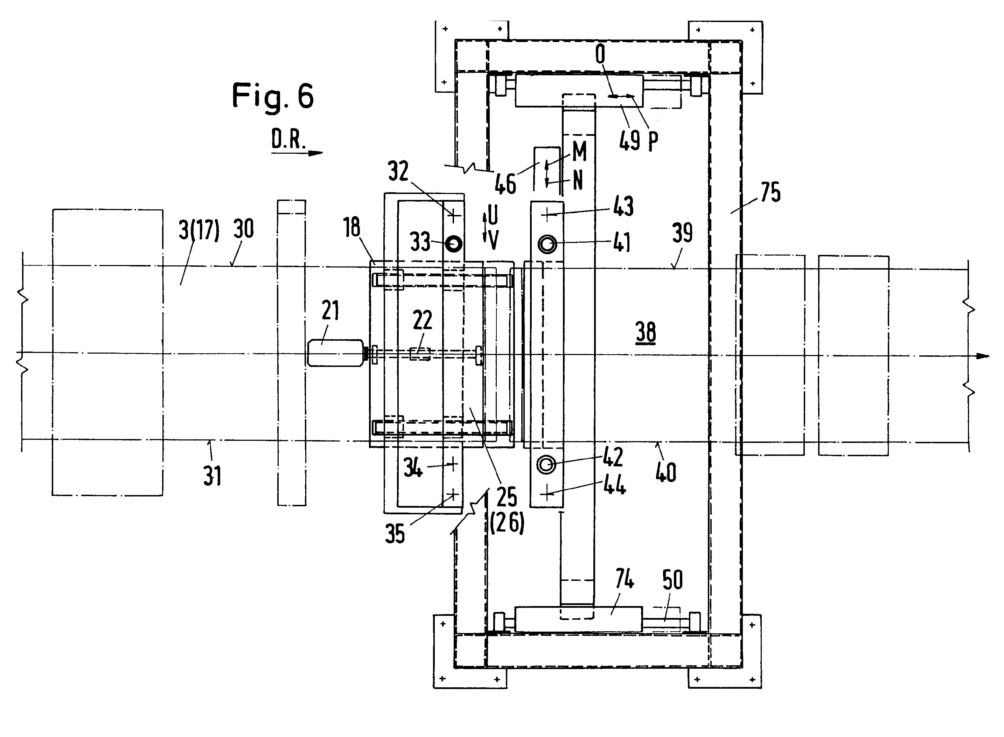

Die Spannbrücke 18 ist im einzelnen aus den Fig. 5 und 6 zu ersehen. Der Horizontalschlitten ist mit dem Bezugszeichen 20 bezeichnet. Dieser ist durch einen motorischen Antrieb 21 (Fig. 5) in Richtung E bzw. F antreibbar. Der Antrieb 21 treibt bei der dargestellten Ausführungsform eine Spindel 22 an, die mit Spindelmuttern 23 bzw. 24 in Eingriff steht und dadurch den Horizontalschlitten 20 in Richtung E bzw. F mitnimmt.

Die Spindel 22 ist in Lager 27 bzw. 28 gelagert, die auf einem Lagerbock 29 angeordnet sind.

Mit dem Bezugszeichen 25 ist eine untere und mit dem Bezugszeichen 26 eine obere Spannbacke bezeichnet.

Wie aus Fig. 6 hervorgeht, sind die Spannbacken 25 und 26 leistenförmig ausgebildet und überragen an beiden Seiten die äußeren Begrenzungen 30 bzw. 31 des Blechbandes 3 oder des entsprechenden Blechbandes 17 des zweiten nachlaufenden Coils 12, falls dieses in Funktion sein sollte.

Bei 32, 33 sind auf der einen Seite des Blechbandes 3 und bei 34, 35 auf der anderen Seite des Blechbandes 3 abwechselnd beidseitig durch Druckmitteldruck, insbesondere durch Hydraulikdruck, zu beaufschlagende Kolben-Zylinder-Einheiten angeordnet, durch die die Spannbacken 25, 26 zwecks Festklemmen des Blechbandes 3 oder 17 gegeneinander in Klemmstellung bewegt oder auch wieder voneinander entfernt werden können. Dieser Hub ist in Fig. 5 mit dem Doppelpfeil G bzw. H angedeutet. Die Lösestellung der Kolben-Zylinder-Einheiten ist in Fig. 5 mit strichpunktierten Linien angedeutet, während die Klemmstellung mit durchgezogenen Linien dargestellt wurde.

Die Spannbrücke 19 weist ebenfalls zwei relativ gegeneinander verstellbare Spannbacken 36 und 37 auf, mit denen das Ende 38 des Blechbandes festgeklemmt werden kann. Die äußeren Umgrenzungen des Blechbandes 38 sind mit den Bezugszeichen 39 bzw. 40 bezeichnet.

Die Bezugszeichen 41 bzw. 42 bezeichnen Säulenführungen, während mit 43 bzw. 44 Kolben-Zylinder-Einheiten bezeichnet sind, die abwechselnd beidseitig mit Druckmitteldruck, insbesondere Hydraulikdruck, zu beaufschlagen sind, um die Spannbacken 36 und 37 in Klemmstellung entweder gegeneinander zu pressen, oder aber sie voneinander senkrecht zu entfernen. Diese Bewegungsmöglichkeiten sind durch den Doppelpfeil F bzw. K in Fig. 5 ebenfalls dargestellt worden. Auch den Spannbacken 25, 26 können solche Säulenführungen zugeordnet sein.

Die Spannbacken 36 und 37 sind wie bei der dargestellten Ausführungsform ebenso groß bemessen wie die Spannbacken 25 und 26, sind also gleichfalls leistenförmig ausgestaltet und überragen an beiden Seiten die äußeren Umgrenzungen 39 und 40 des Blechbahnendes 38.

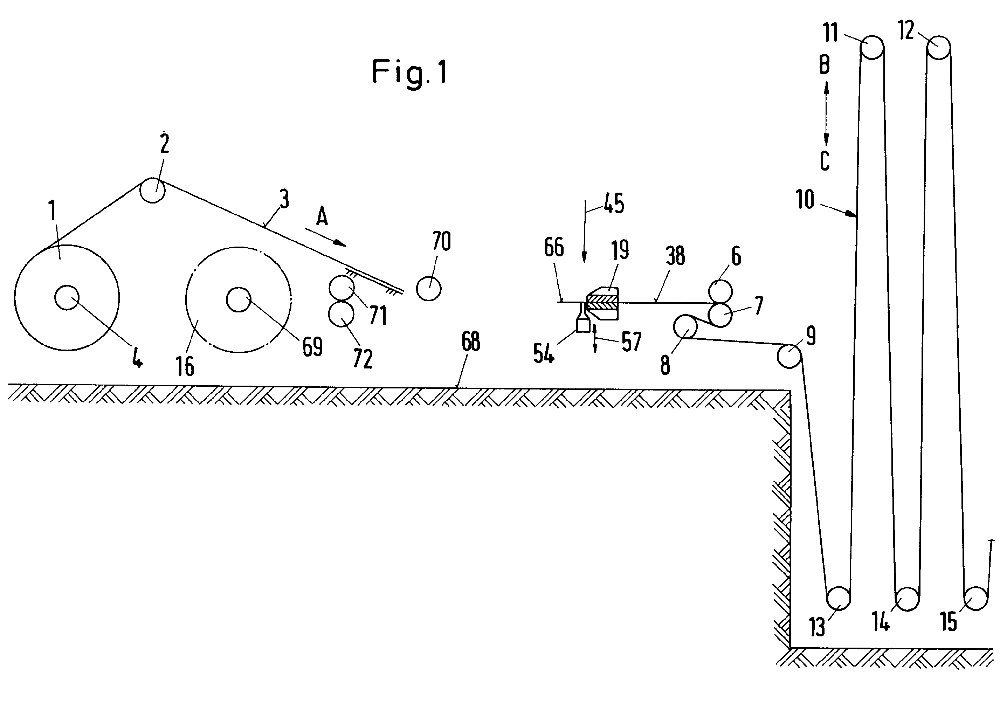

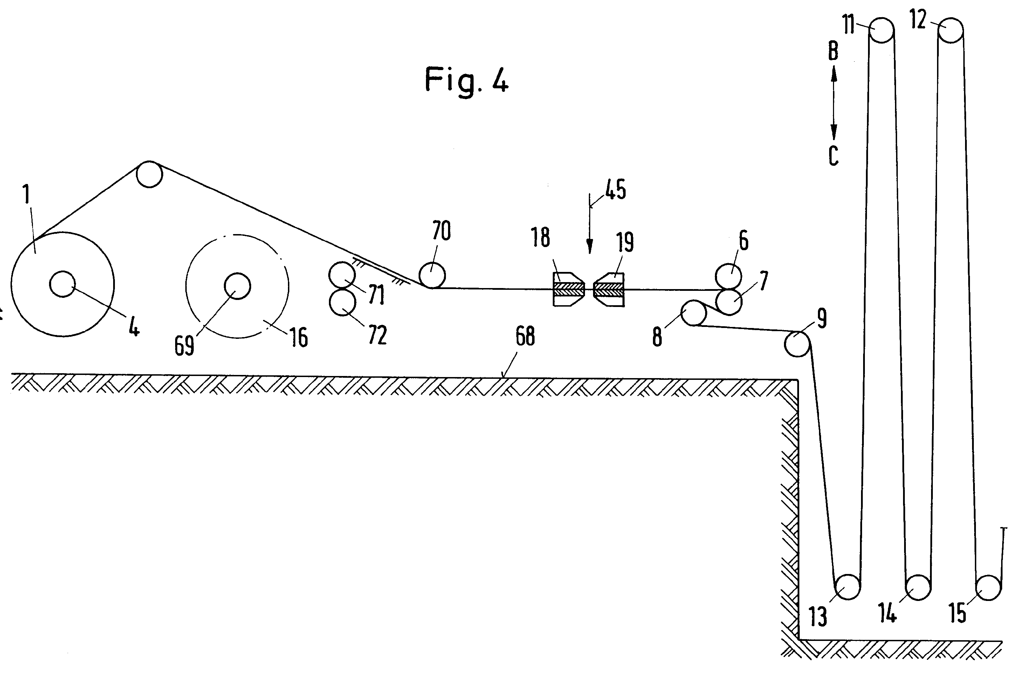

In den Fig. 1 bis 4 ist mit dem Bezugszeichen 45 eine Laserstrahlschweißvorrichtung bezeichnet, die deutlicher aus Fig. 5 hervorgeht. Diese Laserstrahlschweißvorrichtung 45 ist an einem Querschlitten 46 an Linearführungen 47 und 48 orthogonal zur Banddurchlaufrichtung X (Fig. 6) und parallel zur Oberfläche des betreffenden Blechbahnendes, z. B. 38, nach beiden Seiten motorisch verschieblich angeordnet. Diese Querverschiebbarkeit ist in Fig. 6 durch einen Doppelpfeil veranschaulicht und mit den Bezugszeichen M, N bezeichnet worden.

Der Querschlitten 46 ist seinerseits an einer Traverse 73 befestigt, die an jedem Ende an je einem Längsschlitten 49 bzw. 74 befestigt ist. Die Längsschlitten 49 und 74 sind synchron und gleichsinnig parallel zur Durchlaufrichtung X des betreffenden Blechbandes in entgegengesetzten Richtungen motorisch beweglich angeordnet, was in Fig. 6 durch den oberen Doppelpfeil O bzw. P angedeutet ist. Die beiden Schlitten 49 und 74 können über geeignete Linearmotoren 50 bzw. 51, z. B. aber auch durch Spindeln, in Richtung O bzw. P beweglich und in der jeweils gewünschten Stellung auch arretierbar sein.

Zur Feineinstellung ist die Laserstrahlschweißanlage noch wie folgt zu verstellen:

Bei gleich starken Blechen erfolgt die Verschweißung der jeweiligen Coilenden in der nachfolgend noch zu beschreibenden Art und Weise durch eine orthogonale Bewegung der Laserstrahlschweißvorrichtung 45 zur Durchlaufrichtung X parallel zur Oberfläche der miteinander zu verschweißenden Blechbänder.

Handelt es sich um unterschiedlich dicke Bleche, wird der Laser auf einem Kreisbogenabschnitt (Sektor) in Richtung R bzw. S (Fig. 5) bewegt. Gleichzeitig oder nachfolgend ist die Laserstrahlschweißvorrichtung 45 um ein gewisses horizontales Maß in bezug auf die Bandoberfläche verstellbar und in bezug auf die Blechenden auch vertikal einstellbar. Dies kann in der Praxis dadurch geschehen, daß die Laserstrahlschweißvorrichtung 45 um einen Bezugspunkt 52 (Fig. 5) geschwenkt und dieser Bezugspunkt 52 senkrecht zur Oberfläche der beiden Blechbänder in entgegengesetzten Richtungen höhenverstellbar ist. Außerdem kann der Bezugspunkt 52 auch horizontal in bezug auf die Bandoberflächen in Banddurchlaufrichtung X (Fig. 6) oder entgegengesetzt dazu verstellt werden, während die Schweißrichtung, also die Bewegungsrichtung der Laserstrahlschweißvorrichtung 45 nach der Einstellung orthogonal zur Banddurchlaufrichtung X und parallel zur Oberfläche der miteinander zu verschweißenden Blechbänder, also in Richtung U oder V (Fig. 6), erfolgt. Dadurch läßt sich die Laserstrahlschweißvorrichtung 45 sehr feinfühlig in bezug auf den jeweiligen Nahtbereich einstellen. Im übrigen ist die Laserstrahlschweißvorrichtung 45 an einem portalartigen, die Blechbänder quer übergreifenden Traggerüst 75 mit den verschiedenen Schlitten und Traversen angeordnet.

Mit den Bezugszeichen 53 bzw. 54 sind Unterstützungseinheiten im Bereich der Spannbrücken 18 bzw. 19 bezeichnet, die jeweils vertikal wegbeweglich angeordnet sind, was durch die Doppelpfeile 56 bzw. 57 (Fig. 1 bzw. Fig. 2) angedeutet ist. Das Bewegen kann motorisch, z. B. über ein Kniehebelsystem, geschehen.

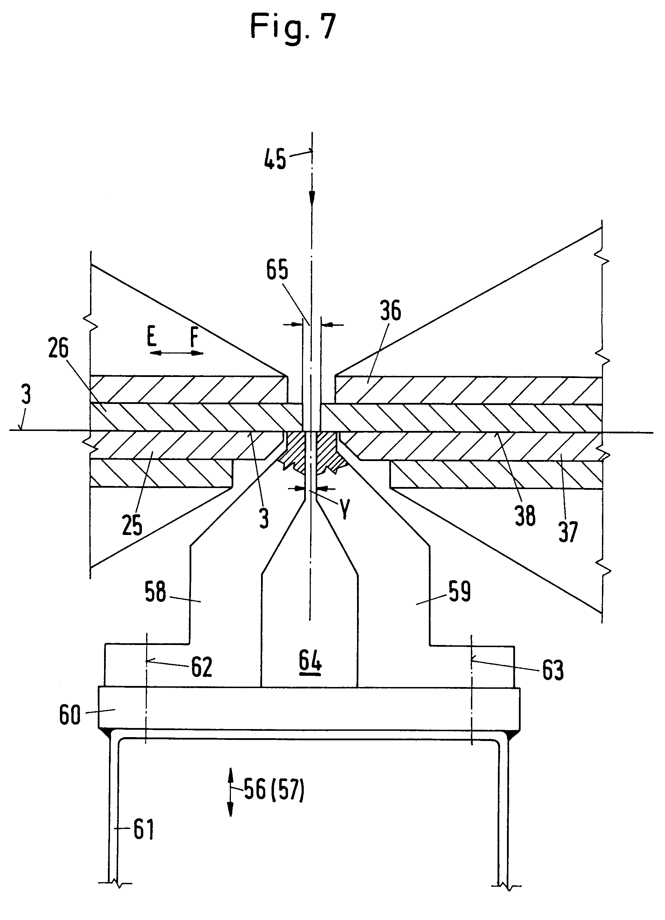

In Fig. 7 ist eine dieser Unterstützungseinheiten 53, 54 dargestellt. Die Unterstützungseinheiten 53, 54 sind gleich ausgebildet und bestehen jeweils aus zwei Leistenkörpern 58 bzw. 59, die gemeinsam über eine Zwischenplatte 60 an einem Querrohr 61, z. B. durch Schrauben, befestigt sind. Die Schrauben sind im einzelnen nicht dargestellt, sondern lediglich durch Mittellinien 62 und 63 angedeutet worden. Selbstverständlich können mehrere als zwei solcher Schrauben vorhanden sein, die in Längsrichtung der Leistenkörper 58 und 59 mit Abstand nebeneinander angeordnet sind.

Die Leistenkörper 58 und 59 belassen zwischen sich einen Hohlraum 64, der zum Zu- und Abführen von Gasen, beispielsweise zum Zuführen von Inertgasen, Flußmitteln oder dergleichen zum Schützen der nicht dargestellten Schweißnaht, dienen kann.

Wie aus Fig. 7 zu erkennen ist, verengt sich der Hohlraum 64 gegen die Blechenden 38, 67, so daß im Abstand von diesen Blechenden 38, 67 die Leistenkörper 58 und 59 nur noch mit einem Schlitzabstand Y zueinander angeordnet sind. Die Blechenden 38, 67 liegen auf den Oberseiten der Leistenkörper 58 und 59 auf, die in einer Ebene liegen. Die leistenförmigen Spannbacken 36 und 37 belassen zwischen sich in diesem Bereich ebenfalls einen Spaltabstand 65, der größer als der Spaltabstand Y ist, den die Leistenkörper 58 und 59 zwischen sich belassen. Z. B. kann der Spaltabstand 65 bei einem konkreten Ausführungsbeispiel 6 mm betragen. In diesem Spaltabstand 65 ist der Laserstrahl 45 in geeigneter Weise anzuordnen, um entweder das Abtrennen eines Coilendes oder das Zusammenschweißen von Coilenden 38, 67 zu bewirken.

Die Wirkungsweise der aus der Zeichnung ersichtlichen Einrichtung ist folgende:

Fig. 1 zeigt den Anfangszustand. Man sieht rechts das Bandende 38 (Fig. 1) des vorlaufenden Coils. Zum Trennen ist es erforderlich, das Coilende 38 relativ zur Spannbrücke 19 stillstehen zu lassen. Dies wird dadurch erreicht, daß der Puffer 10 enger gefahren wird, d. h. die Walzen 11, 12 einerseits oder 13, 14, 15 andererseits nähern sich einander. Dadurch kann das vorlaufende Coil weiterhin mit ungeminderter Geschwindigkeit Bandmaterial aufspulen, während das Coilende 38 in bezug auf die Spannbrücke 19 stillsteht. Es wird hier durch die Spannbacken 36 und 37 der Spannbrücke 19 eingeklemmt, was durch entsprechende Beaufschlagung der Kolben-Zylinder-Einheiten 44 und 45 geschieht, die dabei die Spannbacken 36 und 37 einerseits gegen die Oberfläche des Blechbandes, andererseits gegen dessen Unterfläche anpressen.

Daraufhin wird die Laserstrahlschweißanlage 45 in Betrieb gesetzt, die sich orthogonal in Richtung U bzw. V (Fig. 6) zur Bandoberfläche bewegt und dabei den Randstreifen 66 abschneidet und damit das Blechband auch in diesem Falle rechtwinklig begradigt.

Aus Fig. 2 erkennt man, daß die Laserstrahlschweißvorrichtung 45 bereits den Randstreifen 66 abgetrennt hat. Der abgetrennte Randstreifen 66 fällt nach unten und wird durch eine geeignete Transportvorrichtung wegtransportiert, die nicht dargestellt ist.

Während dieses Vorganges wird das Bandende 38 durch die Leistenkörper 58 und 59 der Unterstützungseinheit 54 unterstützt, die nach dem Abtrennen des Randstreifens 66 nach unten durch Absenken des Querrohres 61 abgesenkt wird.

Die Unterstützungseinheit 54 wurde in Fig. 2 nicht dargestellt, da sie nach unten abgesenkt worden ist.

In Fig. 2 wurde das Ende des nachlaufenden Bandes 3 des nachlaufenden Coils 1 bereits in die Anlage eingefädelt und zwischen den Spannbacken 25 und 26 der Spannbrücke 18 durch entsprechende Hydraulikdruckbeaufschlagung der Kolben-Zylinder-Einheiten 32, 33 bzw. 34, 35 eingeklemmt.

Die Unterstützungseinheit 53 wurde gegen die Unterseite des Randstreifens 67 gefahren, wie dies aus Fig. 2 erkennbar ist.

Anschließend schneidet die Laserstrahlschweißvorrichtung 45 den Randstreifen 67 durch eine orthogonale Bewegung in Richtung U oder V von dem Band 3 ab und begradigt dieses dadurch an den Enden. Der Blechstreifen 67 fällt wiederum nach unten und wird ebenso wie der Blechstreifen 66, der von dem Bandende 38 abgetrennt worden ist, durch eine nicht dargestellte Transportvorrichtung weggefördert, beispielsweise über eine Rutsche oder dergleichen.

Anschließend wird die Unterstützungseinheit 53 nach unten abgesenkt, so daß sie in Fig. 3 nicht mehr dargestellt ist. Sobald der Randstreifen 67 des nachlaufenden Coils 1 abgetrennt worden ist, führt die Spannbrücke 18 einen Fügehub in Richtung auf das Bandende 38 des vorlaufenden Coils aus, bis die Stirnseite des Bandendes des nachlaufenden Coils an der Stirnseite des vorlaufenden Coils stumpf anliegt. Bei gleich starken Blechen erfolgt dann die Verschweißung durch eine orthogonale horizontale Bewegung der Laserstrahlschweißvorrichtung 45 in bezug auf die Bandenden.

Handelt es sich um unterschiedlich dicke Bleche, wird die Laserstrahlschweißvorrichtung 45 auf dem Kreisbogen R bzw. X (Fig. 7) in der oben beschriebenen Art und Weise in bezug auf die Bandoberfläche verstellt und vertikal eingestellt.

Beim Fahren, Öffnen und Lösen der Spannbrücken 18 und 19 werden die Unterstützungseinheit 53 bzw. 54 jeweils abgesenkt.

Die in Banddurchlaufrichtung X vordere Unterstützungseinheit 54 wird beim Trennen und beim Anschweißen in Funktionsstellung gebracht.

Die in Banddurchlaufrichtung X hintere Unterstützungseinheit 53 wird beim Anschweißen abgesenkt.

Mittels der erfindungsgemäßen Einrichtung ist es somit möglich, die Bandenden von vor- und nachlaufenden Blechbahnen sauber durch Laserstrahl abzutrennen und die Bandenden miteinander auch zu verschweißen.

## Patentansprüche

1. Verfahren zum stumpfen Aneinanderschweißen von Stahlblechen (3, 5) dicker als 0,35 Millimetern mittels Laserstrahlschweißverfahren, wobei in demselben Verfahrensablauf an den aneinander zu schweißenden Endabschnitten der Blechbahnen (3, 5) durch Abtrennen mittels eines Laserstrahls je eines endseitigen Randstreifens die Blechbahnenden (3, 5) zur Schweißnahtvorbereitung begradigt und vorbereitet werden, wobei
a) das Blechbahnende (38) des vorlaufenden Coils in bezug auf eine Spannbrücke (19) relativ zum Stillstand gebracht wird und während dieser Zeit das vorlaufende Coil Bandmaterial aus einer Puffervorrichtung (10) erhält;
b) das Blechbahnende (38) von unten abgestützt wird und anschließend von dem aus der Spannbrücke (19) endseitig herausragenden Bahnende ein Randstreifen (66) durch eine Laserstrahlschweißvorrichtung (45) abgetrennt wird, wobei die Laserstrahlschweißvorrichtung (45) beim Abtrennen eine orthogonal zur Banddurchlaufrichtung (X) gerichtete Trennbewegung durchführt und vorzugsweise dabei einen horizontal gleichbleibenden Abstand zur Bahnoberfläche beibehält;
c) nach dem Abtrennen eines Randstreifens (66) von dem Blechbahnende (38) die Unterstützung dieses Blechbahnendes (38) aufgehoben wird;
d) nach dem Einfädeln des Blechbahnendes (67) des nachlaufenden Coils (1) und Umlenken desselben in die Horizontale dieses Ende in einer Spannbrücke (18) festgeklemmt wird;
e) nach dem Festklemmen des Blechbahnendes (67) des nachlaufenden Coils (1) dieses Blechbahnende (67) von unten unterstützt wird und anschließend dieselbe Laserstrahlschweißvorrichtung (45) durch eine orthogonale Bewegung (U - V) zur Banddurchlaufrichtung (X) bei z. B. horizontal gleichbleibendem Abstand zur Bahnoberfläche einen endseitigen Randstreifen (67) von dem Blechband (3) abtrennt;
f) nach dem Abtrennen eines endseitigen Randstreifens (67) die Unterstützung für das Bahnende aufgehoben wird;
g) nach dem Abtrennen eines Randstreifens (67) von dem Bandende des nachlaufenden Coils (1) die durch die Laserstrahlschweißvorrichtung (45) sauber beschnittenen Enden von vorlaufendem (38) und nachlaufendem (3) Band stumpf aneinander liegen;
h) bei gleich starken Blechbändern (3, 17, 38) die Verschweißung durch eine orthogonale Bewegung zur Banddurchlaufrichtung (X) durch dieselbe Laserstrahlschweißvorrichtung (45) erfolgt;
oder bei unterschiedlich dicken Blechbändern (3, 17, 38) von vorlaufendem und nachlaufendem Coil (1, 38) die Laserstrahlschweißvorrichtung (45) um ein gewisses horizontales Maß in bezug auf die Bandoberfläche verstellt und zur Erzielung einer optimalen Schweißnaht auch vertikal in bezug auf die Schweißnaht eingestellt und geschwenkt wird und anschließend das Verschweißen der Bandenden durch eine orthogonal zur Banddurchlaufrichtung (X) erfolgende Bewegung bei z. B. horizontal gleichbleibendem Abstand der Laserstrahlschweißvorrichtung (45) zur Schweißnaht erfolgt.

2. Verfahren nach Anspruch 1, **dadurch gekennzeichnet**, daß gleichzeitig mit einem Horizontalhub der Spannbacken die Laserstrahlschweißanlage wieder in ihre Ausgangsstellung zurückversetzt wird, also parallel zur Bandoberfläche und zur Banddurchlaufrichtung (X) verschoben wird.

3. Einrichtung zum Durchführen des Verfahrens nach Anspruch 1 oder 2, mit mindestens je einem vorlaufenden und einem nachlaufenden Coil (5, 1), wobei durch das vorlaufende Coil (5) das Bandmaterial des jeweils nachlaufenden Coils (1) aufgewickelt wird, mit einer Laserstrahlschweißvorrichtung (45) zum Verbinden der jeweiligen Blechbahnenden des vor- und des nachlaufenden Coils (5, 1), wobei sowohl dem nachlaufenden als auch dem vorlaufenden Randstreifen (z. B. 38) Spannbacken (25, 26) zugeordnet sind, die motorisch in Klemmstellung und in Offenstellung beweglich sind, wobei die Klemmbacken (25, 26) die Randstreifen (38) zwischen sich festklemmen, derart, daß randseitig freie Endabschnitte (66, 67) zwischen den Klemmbacken (25, 26) herausragen; und wobei eine Laserstrahlschweißvorrichtung (45) motorisch orthogonal zur Banddurchlaufrichtung mindestens über die Bahnbreite motorisch verstellbar angeordnet ist, die einerseits die beiden aus den Klemmbackenpaaren herausragenden Blechstreifen zwecks Nahtvorbereitung abtrennt und zum anderen die anschließend stumpf gegeneinander gebrachten Blechbahnenden miteinander verschweißt, wobei
a) eine Puffervorrichtung (10) zum Speichern von Bandmaterial vorgesehen ist;
b) die Spannbrücke (18) für das nachlaufende Coil (1) an einem Horizontalschlitten (20) in Banddurchlaufrichtung (X) in beiden Richtungen motorisch verstellbar und auch in der jeweils gewünschten Lage arretierbar ist;
c) in dem Raum zwischen den beiden Spannbrücken (18, 19) für das nachlaufende und für das vorlaufende Coil (1, 38) zwei absenkbare Unterstützungseinheiten (53, 54) angeordnet sind, die die jeweils zwischen den Spannbacken (25, 26 bzw. 36, 37) herausragenden Randstreifen (66, 67) von unten unterstützen, wobei die Unterstützungseinheiten (53, 54) orthogonal zur Bandunterseite verstellbar angeordnet sind;
d) zusätzlich die Laserstrahlschweißvorrichtung (45) motorisch in Banddurchlaufrichtung (X) mindestens im Bereich zwischen den beiden Klemmbackenpaaren (25, 26 bzw. 36, 37) angeordnet ist.

4. Einrichtung nach Anspruch 3, **dadurch gekennzeichnet**, daß die Laserstrahlschweißvorrichtung (45) in Richtung der X-Achse fliegend an einer Einheit angeordnet ist, die ihrerseits an einem Teil oder Schlitten aufgehängt ist, der orthogonal zur X-Achse (quer zur Banddurchlaufrichtung) verstellbar ist.

## Revendications

1. Procédé pour souder bout à bout des tôles d'acier (3, 5) d'épaisseur supérieure à 0,35 millimètres au moyen d'un procédé de soudage au rayon laser, les extrémités des bandes de tôle (3, 5) étant en une même séquence du procédé et pour préparer le cordon de soudure, redressées et préparées par découpage au moyen d'un rayon laser d'une bande marginale située à chaque extrémité des bandes de tôles (3,5) à souder,
a) l'extrémité (38) de la bande de tôle de la bobine amont étant forcée à s'immobiliser relativement à un pont tensionneur (19) et la bobine amont recevant pendant ce temps de la bande en provenance d'un dispositif-tampon (10);
b) l'extrémité (38) de la bande de tôle étant soutenue par dessous et une bande marginale (66) vaillant de l'extrémité de bande hors du pont tensionneur (19) étant découpée par un dispositif de soudage au rayon laser (45), ledit dispositif (45) décrivant pendant le découpage un mouvement orthogonal par rapport au sens de défilement (X) de la bande de tôle et observant de préférence, pendant cette opération, une distance horizontale constante par rapport à la surface de la bande;
c) le soutènement de l'extrémité (38) de la bande de tôle étant supprimé une fois une bande marginale (66) découpée de ladite extrémité (38);
d) après enfilage de l'extrémité (67) de la bande de tôle de la bobine aval (1) et renvoi de cette extrémité à l'horizontale ladite extrémité étant bridée dans un pont de serrage (18);
e) après le bridage de l'extrémité (67) de la bande de tôle de la bobine aval (1) ladite extrémité (67) étant soutenue par dessous et ensuite le même dispositif de soudage au rayon laser (45) découpant une bande marginale (67) à l'extrémité de la bande tôle (3) tout en décrivant un mouvement orthogonal (U - V) par rapport au sens de défilement (X) de la bande de tôle et observant une distance par ex. horizontale constante par rapport à la surface de la bande;
f) le soutènement de l'extrémité de la bande de tôle étant supprimé une fois une bande marginale (67) découpée;
g) les extrémités de la bande amont (38) et de la bande aval (3), proprement découpées par le dispositif de soudage au rayon laser (45), étant appliquées bout à bout après découpage d'une bande marginale (67) de l'extrémité de bande de la bobine aval (1);
h) le soudage de bande de tôle (3, 17, 38) d'épaisseur identique étant effectué par le même dispositif de soudage au rayon laser (45) qui décrit ce faisant un mouvement orthogonal par rapport au sens de défilement de la bande (X);
ou, si les bandes de tôle (3, 17, 38) en provenance de la bobine amont et aval (1, 38) sont d'épaisseur différente, le dispositif de soudage au rayon laser (45) décalé d'une certaine cote horizontale par rapport à la surface de la bande et étant aussi réglé et basculé verticalement par rapport au cordon de soudure pour obtenir un cordon de soudure optimal, puis le soudage des extrémités de bande ayant lieu par description d'un mouvement orthogonal par rapport au sens de défilement de la bande (X), le dispositif de soudage au rayon laser (45) observant par ex. un écart horizontal constant par rapport au cordon de soudure.

2. Procédé selon revendication 1, caractérisé en ce que simultanément à une course horizontale des mâchoires de serrage l'installation de soudage au rayon laser est ramenée en position de départ, qu'elle est donc déplacée parallèlement à la surface de la bande et au sens de défilement (X) de celle-ci.

3. Dispositif d'exécution du procédé selon la revendication 1 ou 2, avec au moins une bobine amont et une bobine aval (5, 1) la bande de tôle de la bobine aval correspondante (1) étant embobinée par la bobine amont (5), avec un dispositif de soudage au rayon laser (45) pour réunir les extrémités respectives de bande des bobines amont et aval (5, 1), des mâchoires de serrage (25, 26) étant affectées aussi bien aux bandes marginales amont qu'aval (38 par ex.) et amenées par moteur en position de bridage et en position d'ouverture, lesdites mâchoires (25, 26) bridant entre elles les bandes marginales (38) de telle sorte que les segments marginaux libres (66, 67) saillent hors des mâchoires de serrage (25, 26); et un dispositif de soudage au rayon laser (45) étant agencé pour se déplacer, sous l'action d'un moteur, orthogonalement par rapport au sens de défilement de la bande et au moins sur la largeur de la bande, ledit dispositif (45) d'une part sectionnant, en vue de préparer le cordon de soudure, les deux bandes de tôles saillant hors des paires de mâchoires de serrage, et d'autre part soudant bout à bout les extrémités des bandes de tôle amenées l'une contre l'autre,
a) un dispositif-tampon (10) étant prévu pour stocker la bande de tôle;
b) le pont tensionneur (18) pour la bobine aval (1) étant déplaçable, dans le sens de défilement (X) de la bande, par un chariot horizontal (20) dans les deux sens sous l'action d'un moteur et aussi verrouillable dans la position désirée;
c) dans l'espace ménagé entre les deux ponts tensionneurs (18, 18) pour la bobine aval et la bobine amont (1, 38) deux unités de soutènement (53, 54) abaissables étant disposées, qui soutiennent par dessous les bandes marginales (66, 67) saillant hors des mâchoires de serrage (25, 26 et 36, 37), les unités de soutènement (53, 54) étant agencées pour se déplacer orthogonalement par rapport à la face inférieure de la bande;
d) le dispositif de soudage au rayon laser (45) étant disposé motorisé, dans le sens de défilement (X) de la bande, au moins dans la zone comprise entre les deux paires de mâchoires de serrage (25, 26 et 36, 37).

4. Dispositif selon revendication 3, caractérisé en ce que le dispositif de soudage au rayon laser (45) est agencé baladeur, dans le sens de défilement de la bande, contre une unité elle-même accrochée à une pièce ou chariot déplaçable orthogonalement par rapport à l'axe X (transversalement au sens de défilement de la bande).

## Claims

1. Process for butt-welding together of steel sheets (3, 5) of more than 0.35 millimetres in thickness using a laser beam welding process, whereby within the same process the ends of the metal strips (3, 5) are levelled and prepared for production of a weld seam by cutting off one edge strip from each end section, using a laser beam, whereby
a) the end of the metal strip (38) from the leading coil is brought to a standstill in relative position to a clamping yoke (19), and during this time the leading coil receives metal strip from a buffer device (10);
b) the end of the metal strip (38) is supported from below, after which an edge strip (66) is cut from the end of the strip protruding from the clamping yoke (19), using a laser welding device (45), whereby in the course of the cutting process the laser welding device carries out a cutting movement orthogonal to the feed direction (X) of the metal strip, thereby expediently maintaining a constant horizontal distance from the surface of the metal strip;
c) after an edge strip (66) has been cut from the end of the metal strip (38), the support for this end of the metal strip (38) is removed;
d) after the end of the metal strip (67) from the following coil (1) has been threaded and levelled in horizontal position, this end is clamped in a clamping yoke (18);
e) after the end of the metal strip (67) from the following coil (1) has been clamped, this end of the metal strip (67) is supported from below, after which the same laser welding device (45) cuts an end strip (67) from the metal strip (3) by performing an orthogonal movement (U - V) to the feed direction (X) of the metal strip, maintaining, for example, a constant horizontal distance from the surface of the metal strip;
f) after an end strip (67) has been cut off, the support for the end of the strip is removed;
g) after an end strip (67) has been cut from the end of the metal strip from the following coil (1), the ends of the leading (38) and following (3) strips, which have been cut cleanly by the laser welding device (45), abut each other;
h) when the metal strips (3, 17, 38) are of equal thickness, welding is effected via the same laser welding device (45) moving orthogonally to the feed direction (X) of the metal strip;
i) when the metal strips (3, 17, 38) from the leading and following coil (1, 38) are of different thicknesses, the laser welding device (45) is displaced by a certain horizontal measurement in relation to the surface of the metal strip and, in order to attain an optimal welding seam, is also vertically displaced and adjusted in relation to the weld seam, after which the ends of the metal strips are welded via a movement orthogonal to the feed direction of the metal strip (X), whereby the laser welding device (45) maintains, for example, a constant horizontal distance from the weld seam.

2. Process in accordance with claim 1, **characterised in that** when the clamping jaws execute a horizontal stroke the laser welding station is simultaneously returned to its starting position, i.e. it is displaced parallel to the surface of the metal strip and to the feed direction (X) of the metal strip.

3. Arrangement for carrying out the process in accordance with claim 1 or 2, with at least one leading and one following coil (5, 1) whereby the leading coil (5) coils up the metal strip from the appurtenant following coil (1), with a laser welding device (45) for joining the ends of the metal strips from the leading and following coils (5, 1) respectively, whereby clamping jaws (25, 26) are provided for both the following and the leading edge strip (e.g. 38), whereby these clamping jaws (25, 26) can be moved by a motor into clamping position and open position, and whereby the clamping jaws (25, 26) clamp the edge strips (38) in such a manner that free end sections (66, 67) protrude from between the clamping jaws (25, 26); and whereby a laser welding device (45) can be moved by a motor orthogonally to the feed direction of the metal strip across the width of the metal strip at least, said welding device (45) cutting off the strips of metal which protrude out of the clamping jaws to prepare the strips for welding and subsequently welding the abutting ends of the metal strips together, whereby
a) a buffer device is provided for storing metal strip;
b) the clamping yoke (18) for the following coil (1) is mounted on a horizontal slide (20) in the feed direction (X) of the metal strip and can be moved in both directions by a motor and locked in any desired position;
c) in the space between the two clamping yokes (18, 19) two lowerable support units (53, 54) are provided for the following and the leading coil (1, 38), said supporting units serving to support from below the edge strips (66, 67) which protrude from between the clamping jaws (25, 26 and 36, 37), whereby the support units (53, 54) can be moved orthogonally to the underside of the metal strip;
d) the laser welding device (45) is additionally movable by motor actuation in the feed direction (x) of the metal strip, in the area between the two pairs of clamping jaws (25, 26 and 36, 37) at least.

4. Arrangement in accordance with claim 3, **characterised in that** the laser welding device (45) is mounted overhung on a unit in the direction of the X axis, whereby the said unit is, in turn, suspended on a component or slide which can be displaced orthogonally to the X axis (transversely to the feed direction of the metal strip).
